# EUROPÄISCHE PATENTSCHRIFT

(11) **EP 0 763 589 B1**
(45) Veröffentlichungstag und Bekanntmachung des Hinweises auf die Patenterteilung: **27.10.1999**
(21) Anmeldenummer: 96114111.6
(22) Anmeldetag: 04.09.1996
(51) Int. Cl.: C10J 3/86, F22B 1/18, F22B 37/10

(54) **Feuerfestauskleidung im Übergang eines Vergasers zum Abhitzekessel**
Refractory lining in the transition between a gasifier and a waste heat boiler
Revêtement réfractaire dans une transition entre un gazéificateur et une chaudière de récupération

(30) Priorität: 13.09.1995 DE 19533912
(43) Veröffentlichungstag der Anmeldung: 19.03.1997
(73) Patentinhaber: Metallgesellschaft Aktiengesellschaft, 60325 Frankfurt am Main (DE); TEXACO DEVELOPMENT CORPORATION, White Plains, New York 10650-0001 (US)
(72) Erfinder: Heering, Jürgen, Dr.-Ing., 41352 Korschenbroich (DE); Köhnen, Klaus, Dipl.-Ing., 45481 Mülheim (DE); Brooker, Duane, c/o Tecaxo Inc., Res & Dev, Beacon, NY 12508 (US)

(56) Entgegenhaltungen:
- EP-A- 0 048 326
- EP-A- 0 251 005
- DE-C- 3 713 912
- US-A- 4 948 387

## Beschreibung

Die Erfindung betrifft eine Feuerfestauskleidung in der Übergangsstrecke eines Vergasers zum Abhitzekessel mit Konsolen für die Befestigung von feuerfesten Formsteinen.

Der Übergang vom Vergaser zum Abhitzekessel wird sowohl vom heißen Synthesegas durchströmt als auch durch heiße Schlacke beaufschlagt. Die Temperaturen liegen in dieser Übergangsstrecke bei über 1400 °C.

Bei diesen hohen Temperaturen und der zusätzlichen Gas-/Feststoffströmung ist ein ungeschützter Werkstoff aus Stahl nicht beständig. Daher wird dieser Bereich mit feuerfestem Material ausgekleidet. Man hat die Wahl zwischen dem Einsatz von Stampfmassen, ff-Formsteinen oder einer Kombination aus beiden Materialien, wobei jedoch die Formsteine die bessere Werkstoffqualität bieten.

Aus einem von der Anmelderin für die Synthesegasanlage Ruhr (SAR) der Ruhrchemie in Oberhausen-Holten gelieferten Reaktorgefäß mit anschließendem Abhitzekessel eines Synthesegaskühlers ist der Übergang zwischen Reaktorgefäß und Synthesegaskühler mit einer feuerfesten Zustellung aus Formsteinen ausgekleidet.

Die oberen Formsteine sind jeweils ringförmig auf Gußkonsolen aufgelegt, die übereinander am Stutzenende des Vergasers und am Stutzenende des Synthesegaskühlers befestigt sind. Die Formsteine im Bereich des Kühlrohrkäfigs sind auf umlaufenden Rohrnasen am Übergang von vertikalen Kühlrohren in die horizontale Kühlrohrwand aufgelegt.

Durch die Abstützung bzw. Auflage der ff-Formsteine auf den umlaufenden Nasen des Kühlrohrkäfigs sowie durch einen Festpunkt am Ende des Vergaserstutzens ohne zusätzliche Dehnfugen und elastische Zwischenmaterialien, werden die Wärmespannungen durch hohe Temperaturen und dadurch hervorgerufene ff-Materialbewegungen direkt auf die wasserseitigen Hochdruckteile, beispielsweise die Rohre des Kühlrohrkäfigs, übertragen; weiterhin lastet das gesamte Eigengewicht der Steine auf den Abstützungen. Ferner sind die oberen Festpunkte (Konsolen) am Übergang zwischen beiden Gefäßen ungekühlt und bei fortlaufendem Verschleiß des ff-Materials stärker werdenden Überhitzungen ausgesetzt.

Aufgabe der Erfindung ist es deshalb, die Feuerfestauskleidung in der Übergangsstrecke zwischen Reaktor und Synthesegaskühler so zu gestalten, daß die Spannungen im ff-Material reduziert, das Eigengewicht der Steine auf verschiedene Auflagen verteilt, eine Kompensation der Relativbewegungen zwischen ff-Steinen und den Halterungen erfolgt, schroffe Querschnittsübergänge entfallen, die Halterungen nicht an wasserführenden Komponenten (Kesselrohre) befestigt werden und die sogenannte Hauptpratze durch eine Zusatzkühlung vor Überhitzung geschützt wird.

Die Lösung der Aufgabe erfolgt durch die kennzeichnenden Merkmale von Anspruch 1, die Unteransprüche stellen eine vorteilhafte Ausgestaltung der Erfindung dar.

Erfindungsgemäß besteht der Feuerfestbereich aus drei verschiedenen, nebeneinander angeordneten Steinlagen im ungekühlten Stutzen sowie aus verschiedenen Spezialformsteinen, Schulterformsteinen und Normalsteinen, die auf die Verhältnisse von Temperatur, Verschleiß, Innen- und Außendruck sowie Standzeit abgestimmt sind.

Die feuerfeste Steinauskleidung wird am Stutzen und am Kühlrohrkäfig des Synthesegaskühlers durch ein Steinhaltesystem abgestützt, das aus übereinander angeordneten Konsolen besteht, die im Bereich des Kühlrohrkäfigs an den Stegen der Rohr-Steg-Rohr-Schweißung befestigt und im Bereich des Stutzens an Pratzen aufgehängt und dort zusätzlich gekühlt werden. Durch diese erfindungsgemäßen Maßnahmen werden u. a. folgende Anforderungen erfüllt:
- die Abstützungen für die ff-Steine werden auf verschiedene Ebenen verteilt, um die Steingewichte aufzuteilen und um so lokale Spannungen niedrig zu halten,
- eine Kompensation der Relativbewegungen zwischen den ff-Steinen und der Halterungsstruktur wird durch Verwendung von keramischem, elastischem Material gewährleistet,
- Schroffe Querschnittsübergänge im Übergang entfallen,
- die Steinhalterungen werden an den Stegen zwischen den wasserseitigen Hochdruckteilen (Kesselrohren) angeschweißt,
- Schützen der Hauptpratze vor Überhitzung durch Einbau einer Zusatzkühlung,
- Auswahl der Steinformate und des Steinaufbaus so durchführen, daß Spannungen in den Steinen gering bleiben,
- Ausprägung einer Tropfnase am unteren Ausgang des Kühlrohrkäfigs, damit die Schlacke nicht an der Horizontalwand entlang kriecht und diese sowie die Schottwände und den Rohrkäfig verschlackt.

Ein Ausführungsbeispiel der Erfindung wird anhand von schematischen Zeichnungen näher erläutert.

Es zeigen:
- Fig. 1: einen Schnitt durch den Übergang von Vergaser und Abhitzekessel,
- Fig. 2: einen Schnitt durch das ff-Material am Übergang von Vergaser zum Abhitzekessel.

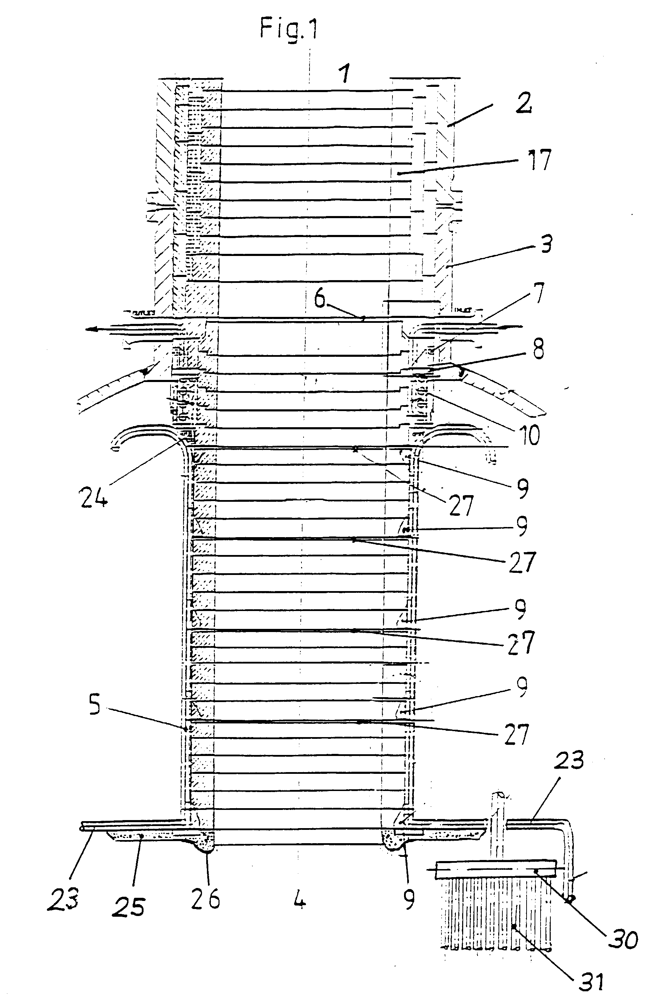

Entsprechend von Fig. 1 ist in der Übergangsstrecke zwischen Vergaser (1) und dem Abhitzekessel (4) im Inneren eine ff-Auskleidung, die aus einer Reihe von Normal- und Formsteinen besteht, eingebracht.

Die Übergangsstrecke besteht außen aus dem ungekühlten Vergaserstutzen (2) und dem gekühlten Rohrkäfig (5) im oberen Teil des Abhitzekessels (3, 4).

Die Abstützung der ff-Auskleidung erfolgt im Rohrkäfig (5) durch übereinander angeordnete Konsolen (9), die an den Stegen (Rohr-Steg-Rohrschweißung) des Rohrkäfigs (5) angeschweißt sind.

Im Stutzen (3) des Abhitzekessels (4) sind Haken (7) angebracht, in die Pratzen (8) zur Abstützung der oberen ff-Auskleidung eingebracht sind. Die Pratzen (8) werden durch ein Kühlsystem (10, 11, 12) vor Überhitzung geschützt.

Die unterste Konsole (9) am Kühlrohrkäfig (5), die horizontale Rohrwand (23), der Sammler (30) und die Rohrwand (31) werden durch eine zusätzlich aufgebrachte ff-Masse (25) mit einer umlaufenden Tropfnase (26) gegen Verschlackung geschützt.

Zwischen den Fomsteinsegmenten (17) sind jeweils unterhalb der Konsolen (9) Dehnfugen (27) vorgesehen, während am Übergang zum Stutzen (2) zwischen die ff-Auskleidung eine ringförmige, keramische Faserplatte (6) eingelegt wird. Zwischen dem oberen Teil des Rohrkäfigs (5) und dem Kühlsystem (10, 11, 12) wird eine ff-Stampfmasse (24) oder dergleichen aufgebracht.

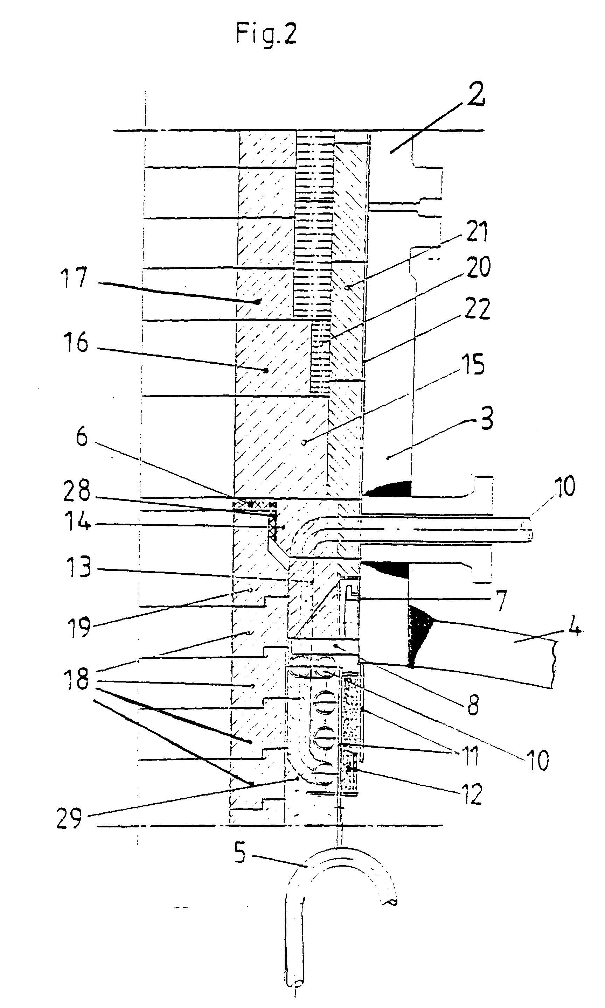

Aus Fig. 2 ist der Aufbau der ff-Auskleidung in der Übergangsstrecke von Vergaser- (2) und Eintrittsstutzen (3) des Abhitzekessels (4) dargestellt. Die Halterung der ff-Ausmauerung erfolgt durch Pratzen (8), die durch ein Kühlsystem (10, 11, 12) vor Überhitzung geschützt werden.

Auf die Pratzen (8) werden zunächst je eine Lage Formsteine (13, 14) gelegt, zur Mitte hin werden die Formsteine (18, 19) verwendet, wobei auf den Stein (19) kreisförmige Segmente einer horizontal angeordneten keramischen Faserplatte (6) und zwischen den Steinen (19) und (14) eine vertikal angeordnete Faserplatte (28) eingelegt werden. Darüber werden innen die Steine (15, 16) in je einer Lage und darüber die Steine (17) angeordnet. Zur Isolierung werden ferner mittlere (20) und äußere Formsteine (21) sowie eine keramische Matte (22) verwendet.

### Bezugsziffernliste:

- 1: Übergangsstrecke
- 2: Vergaser
- 3: Eintrittsstutzen Abhitzekessel
- 4: Abhitzekessel
- 5: Kühlrohrkäfig
- 6: Keramische Fasermatte
- 7: Haken
- 8: Pratze
- 9: Konsole
- 10: Kühlschlangenrohre
- 11: Abdichtkasten
- 12: Keramische Wolle
- 13: Formstein
- 14: Formstein
- 15: Formstein
- 16: Formstein
- 17: Innerer Formstein
- 18: Schulterformstein
- 19: Schulterformstein
- 20: Mittlerer Formstein
- 21: Äußerer Formstein
- 22: Keramische Matte
- 23: Horizontale Rohrwand
- 24: Isoliermasse
- 25: ff-Stampfmasse
- 26: Tropfnase
- 27: Dehnfugen
- 28: Keramische Fasermatte
- 29: Keramischer Fasermatten-Block
- 30: Sammler
- 31: Rohrwand

## Patentansprüche

1. Feuerfestauskleidung in der Übergangsstrecke eines Vergasers zum Abhitzkessel mit Konsolen für die Befestigung von ff-Formsteinen,
dadurch gekennzeichnet,
daß in der Übergangsstrecke (1) am Eintrittsstutzen (3) des Abhitzekessels (4) an Haken (7) aufgehängte Pratzen (8) eingebracht sind,
daß unterhalb der Pratzen (8) Kühlschlangenrohre (10) in einem Abdichtkasten (11) angeordnet sind,
daß in dem Kühlrohrkäfig (5) in Abständen übereinander Konsolen (9) befestigt sind,
daß auf die Pratzen (8) und die Konsolen (9) übereinander geschichtete ff-Steine aufgelegt sind.

2. Feuerfestauskleidung nach Anspruch 1,
dadurch gekennzeichnet,
daß auf die Pratzen (8) ein Verbund von Formsteinen (13, 14, 15, 16 und 17) übereinander eingebracht wird.

3. Feuerfestauskleidung nach Anspruch 2,
dadurch gekennzeichnet,
daß in Höhe der Formsteine (13, 14) zur Mitte hin Schulterformsteine (18, 19), eine horizontal angeordnete keramische Faserplatte (6) und eine vertikal angeordnete keramische Faserplatte (28) eingebracht sind.

4. Feuerfestauskleidung nach Anspruch 2 und 3,
dadurch gekennzeichnet,
daß zwischen den innen angeordneten Formsteinen (15, 16, 17) und dem Eintrittsstutzen (3) mittlere und äußere Formsteine (20, 21) und keramische Matten (22) eingebracht sind.

5. Feuerfestauskleidung nach Anspruch 1,
dadurch gekennzeichnet,
daß auf die Konsolen (9),übereinander Formsteine (17) eingebracht sind und daß unterhalb jeder Konsole (9) zwischen den Formsteinen (17) eine Dehnfuge (27) vorgesehen ist.

6. Feuerfestauskleidung nach Anspruch 5,
dadurch gekennzeichnet,
daß am unteren Ende des Kühlrohrkäfigs (5) und an der Unterseite der horizontalen Rohrwand (23) eine ff-Stampfmasse (25) mit einer nach innen gerichteten Tropfnase (26) aufgebracht ist.

7. Feuerfestauskleidung nach Anspruch 5 und 6,
dadurch gekennzeichnet,
daß ausgangs des Kühlrohrkäfigs (5) oberhalb der Konsole (9) Schulterformsteine (18) eingebracht sind.

8. Feuerfestauskleidung nach Anspruch 1,
dadurch gekennzeichnet,
daß um die Kühlschlangenrohre (10) herum keramische Fasermatten-Blöcke (29) eingelegt sind.

## Claims

1. A refractory lining in the transitional section from a gasifier to a waste heat boiler, with brackets for attaching refractory moulded bricks, characterised in that
claws (8) suspended on hooks (7) are arranged in the transitional section (1) at the entry port (3) of the waste heat boiler (4),
beneath the claws (8) cooling coil tubes (10) are arranged in a sealing box (11),
brackets (9) are fastened spaced apart one above the other in the cooling coil cage (5), and
layered refractory bricks are laid one upon the other on the claws (8) and the brackets (9).

2. A refractory lining according to Claim 1,
characterised in that a set of moulded bricks (13, 14, 15, 16 and 17) is arranged one above the other on the claws (8).

3. A refractory lining according to Claim 2,
characterised in that moulded shouldered bricks (18, 19), a horizontally arranged ceramic fibre plate (6) and a vertically arranged ceramic fibre plate (28) are arranged at the level of the moulded bricks (13, 14) towards the centre.

4. A refractory lining according to Claims 2 and 3,
characterised in that middle and outer moulded bricks (20, 21) and ceramic mats (22) are arranged between the internally arranged moulded bricks (15, 16, 17) and the entry port (3).

5. A refractory lining according to claim 1,
characterised in that moulded bricks (17) are arranged one above the other on the brackets (9), and that an expansion joint (27) is provided beneath each bracket (9) between the moulded bricks (17).

6. A refractory lining according to Claim 5,
characterised in that a refractory ramming compound (25) with an inward-directed drop nose (26) is applied to the lower end of the cooling coil cage (5) and on the underside of the horizontal tube wall (23).

7. A refractory lining according to Claims 5 and 6,
characterised in that moulded shouldered bricks (18) are arranged at the outlet from the cooling coil cage (5) above the bracket (9).

8. A refractory lining according to Claim 1,
characterised in that ceramic fibre mat blocks (29) are inserted around the cooling coil tubes (10).

## Revendications

1. Revêtement réfractaire dans le raccordement entre un gazéificateur et une chaudière de récupération, comprenant des consoles pour la fixation de briques moulées réfractaires
caractérisé,
en ce que des griffes (8) suspendues à des crochets (7), sont mises en place dans le raccordement (1) sur la tubulure d'entrée (3) de la chaudière de récupération (4),
en ce que des tubes de refroidissement en serpentins (10) sont agencés dans un caisson étanche (11), au-dessous des griffes (8),
en ce que des consoles (9) sont fixées les unes au-dessus des autres à distance dans la cage de tubes de refroidissement (5),
en ce que des briques réfractaires sont posées en couches superposées sur les griffes (8) et les consoles (9).

2. Revêtement réfractaire selon la revendication 1, caractérisé en ce que, sur les griffes (8), est déposé un assemblage de briques moulées (13, 14, 15, 16 et 17) les unes au-dessus des autres.

3. Revêtement réfractaire selon la revendication 2, caractérisé en ce qu'à la hauteur des briques moulées (13, 14) sont disposées, plus loin vers le centre, des briques moulées d'épaulement (18, 19), une plaque fibreuse céramique (6) disposée horizontalement et une plaque fibreuse céramique (28) disposée verticalement.

4. Revêtement réfractaire selon les revendications 2 et 3, caractérisé en ce qu'entre les briques moulées (15, 16, 17) disposées à l'intérieur et la tubulure d'entrée (3), sont disposées des briques moulées centrales et extérieures (20, 21) ainsi que des mats céramiques (22).

5. Revêtement réfractaire selon la revendication 1, caractérisé en ce que des briques moulées (17) sont disposées les unes au-dessus des autres sur les consoles (9), et qu'au-dessous de chaque console (9), un joint de dilatation (27) est prévu entre les briques moulées (17).

6. Revêtement réfractaire selon la revendication 5, caractérisé en ce qu'à l'extrémité inférieure de la cage de tubes de refroidissement (5) et sur la face inférieure de la paroi de tubes horizontale (23), est appliqué un pisé réfractaire damé (25) avec un rejet (26) dirigé vers l'intérieur.

7. Revêtement réfractaire selon les revendications 5 et 6, caractérisé en ce qu'à la sortie de la cage de tubes de refroidissement (5), des briques moulées d'épaulement (18) sont mises en place au-dessus de la console (9).

8. Revêtement réfractaire selon la revendication 1, caractérisé en ce que des blocs en mats de fibres céramiques (29) sont disposés autour des tubes de refroidissement en serpentins (10).
